# FASCICULE DE BREVET EUROPEEN

(11) **EP 3 528 009 B1**
(45) Date de publication et mention de la délivrance du brevet: **18.11.2020**
(21) Numéro de dépôt: 19154233.1
(22) Date de dépôt: 29.01.2019
(51) Int. Cl.: G01S 19/14, G01S 19/42

(54) **SYSTEME ET METHODE DE DETECTION DE TUNNEL POUR VEHICULE AUTOMOBILE**
SYSTEM UND VERFAHREN ZUM DEKETIEREN EINES TUNNELS FÜR EIN FAHRZEUG
SYSTEM AND METHOD FOR DETECTING A TUNNEL FOR A VEHICLE

(30) Priorité: 15.02.2018 FR 1851283
(43) Date de publication de la demande: 21.08.2019
(73) Titulaire: Aptiv Technologies Limited, St. Michael (BB)
(72) Inventeur: NARULA, Prasant J., 42349 Wuppertal (DE); STATNIKOV, Konstantin, 40239 Düsseldorf (DE)
(74) Mandataire: Vigand, Philippe

(56) Documents cités:
- DE-A1-102015 016 045
- US-A1- 2006 271 295
- US-A1- 2015 296 041

## Description

### DOMAINE TECHNIQUE

La présente invention concerne un système de détection de tunnel pour véhicule automobile ainsi que la méthode de détection du tunnel par le système.

### ARRIERE-PLAN TECHNOLOGIQUE DE L'INVENTION

La détection de tunnel par un système de détection comprenant des caméras dans un véhicule est connue. Cette détection est généralement basée sur la reconnaissance de panneaux de signalisation. La détection de tunnel rend possible l'adaptation des dispositifs d'aide à la conduite lors de la traversée du véhicule dans le tunnel.

Lors de la défaillance des caméras permettant la détection de tunnel, l'adaptation des dispositifs d'aide à la conduite lors de la traversée du véhicule dans le tunnel ne devient plus possible.

Pour des raisons économiques, certains véhicules ne sont pas équipés de caméras surveillant la route.

Une alternative connue pour la détection de tunnel est la détection de tunnel par signal radar. Néanmoins, cette alternative est peu robuste et peut remonter aux dispositifs d'aide à la conduite de fausses informations. L'exemple le plus redouté concerne une fausse détection d'obstacle sur le trajet du véhicule au lieu d'une détection de tunnel. En effet, dans cette situation d'erreur, si le véhicule est équipé d'une fonction de freinage d'urgence automatique, cette fonction peut s'enclencher à tort puisque le véhicule est simplement dans un tunnel dont la structure provoque des réflexions d'ondes radars faussement interprétées comme la présence d'un obstacle sur le trajet du véhicule.

US 2015/296041 A1 divulgue un procédé dans lequel des données de contrainte, associées à un dispositif de communication mobile exécutant une session de communication associée à une application mobile utilisant une connexion sans fil, sont collectées. Des valeurs de poids sont attribuées aux données de contrainte. Un score pour la session de communication est généré sur la base des données, chaque donnée étant modifiée sur la base du poids correspondant. Si le score se situe dans une première plage, un contexte correspondant à la session de communication est stocké et la session est prolongée. Si le score se situe dans une deuxième plage différente de la première, le contexte est stocké et la session de communication est maintenue comme une session transitoire. Si le score ne se situe ni dans la première plage, ni dans la deuxième plage, la session de communication est interrompue.

US 2006/271295 A1 décrit un système de navigation permettant d'améliorer la fiabilité de l'estimation d'une solution du système de navigation.

DE 10 2015 016045 A1 décrit un système de détermination de la position d'un véhicule pour vérifier si le véhicule est situé dans une zone couverte par un élément de plafond d'une structure.

Il est donc important de proposer une solution nouvelle résolvant ces problèmes.

### RESUME DE L'INVENTION

Le but de l'invention est de pouvoir détecter la traversée d'un véhicule dans un tunnel en utilisant uniquement des capteurs standards embarqués dans le véhicule sans avoir besoin de capteurs supplémentaires comme une caméra ou un radar. De plus, si une caméra est disponible mais non fonctionnelle en raison d'une défaillance du capteur, la substitution du dispositif de détection de tunnel par caméra par l'invention permet de détecter si le véhicule entre ou sort d'un tunnel afin de pouvoir effectuer les adaptations nécessaires dans le véhicule.

Selon un premier mode de réalisation, un système de détection de tunnel pour véhicule automobile est défini par la revendication 1.

Le récepteur de signaux radiofréquence peut comprendre un système de géolocalisation par satellite.

La variation d'amplitude de signal de référence prédéterminée peut comprendre une variation d'amplitude décroissante exponentielle prédéterminée ou croissante exponentielle prédéterminée représentative respectivement du passage du récepteur dans une entrée de tunnel ou dans une sortie de tunnel de sorte à pouvoir détecter le tunnel traversé par le système de détection.

Selon l'invention un véhicule automobile comprend le système de détection de tunnel du premier mode de réalisation. Le véhicule automobile peut comprendre un dispositif de freinage d'urgence automatique par détection radar relié électriquement au système de détection de tunnel de sorte que le système de détection de tunnel puisse autoriser ou non un freinage automatique d'urgence.

Selon l'invention, une méthode de détection d'un tunnel par un véhicule automobile comprenant le système de détection du premier mode de réalisation comprend les étapes définies dans la revendication 5.

L'étape de déterminer au moins un niveau de correspondance peut comprendre une étape de déterminer au moins un niveau de correspondance représentatif de la différence entre la variation d'amplitude détectée du signal radiofréquence avec une variation d'amplitude décroissante exponentielle prédéterminée ou croissante exponentielle prédéterminée représentative respectivement de la traversée du récepteur dans une entrée de tunnel ou dans une sortie de tunnel.

Selon l'invention, une méthode d'activation d'une fonction de freinage d'urgence automatique d'un véhicule comprenant la méthode de détection décrite ci-dessus comprend une étape d'autoriser la fonction de freinage d'urgence automatique lors de la détection du tunnel traversé par le système de détection.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- La figure 1 est une représentation schématique d'un véhicule traversant un tunnel et soumis à des conditions phénomènes extérieurs au véhicule.
- La figure 2 est un graphe illustrant un exemple de variation d'amplitude détectée d'un signal radiofréquence reçu par le récepteur de signal radiofréquences du véhicule.
- La figure 3 est une représentation schématique du bloc diagramme du système de détection de tunnel associé à des fonctions d'aide à la conduite du véhicule selon un premier mode de réalisation.
- La figure 4 est un tableau d'exemple de scénario de détection d'un tunnel traversé par le véhicule équipé du système de détection de la figure 3.
- La figure 5 est un organigramme d'une méthode de détection d'un tunnel par un véhicule automobile.

### DESCRIPTION DES MODES DE REALISATION PREFERES

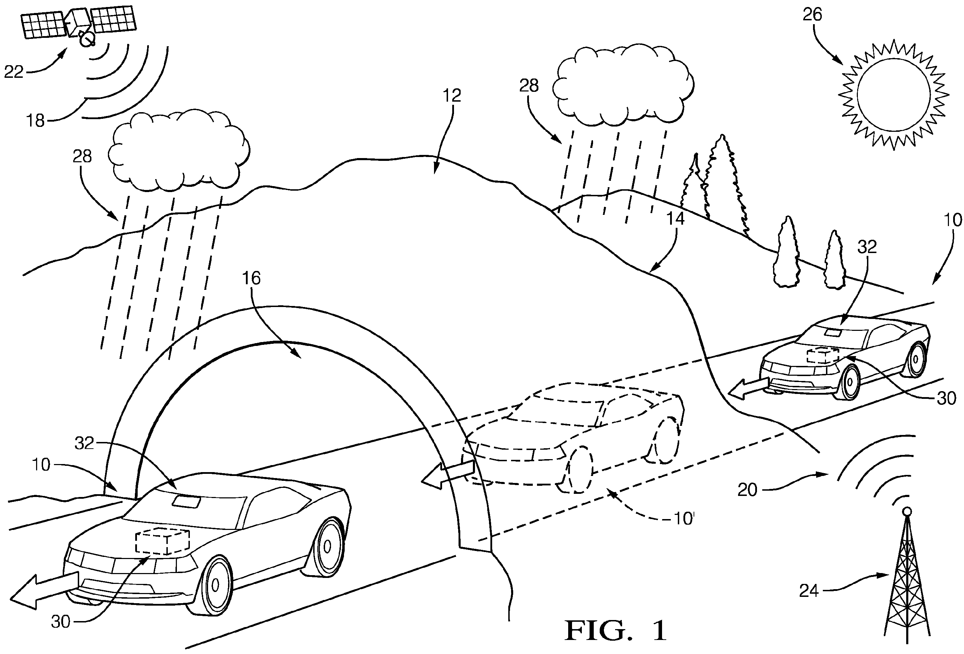

Selon la figure 1, un véhicule 10 automobile est représenté en train de traverser un tunnel 12. La traversée du tunnel 12 s'effectue en trois phases. Le véhicule 10 est représenté aux trois phases de traversée du tunnel. Le véhicule est représentée une première fois à la première phase, la dite première phase consistant au passage du véhicule 10 dans l'entrée 14 du tunnel 12. Le véhicule 10 est représenté une seconde fois (en traits pointillés), par transparence au travers du tunnel 12, à la seconde phase, ladite seconde phase consistant au roulage du véhicule 10 à l'intérieur du tunnel 12. Le véhicule 10 est représentée une troisième fois à la troisième phase, la dite troisième phase consistant au passage du véhicule 10 dans la sortie 16 du tunnel 12.

Selon la figure 1, lorsque le véhicule 10 se trouve à l'air libre, donc pas dans le tunnel 12, le véhicule 10 est soumis à plusieurs phénomènes extérieurs au véhicule 10.

Le véhicule 10 est soumis à diverses ondes radiofréquences 18, 20 provenant de sources extérieures au véhicule 10. Par exemple et de façons non limitatives, les ondes radiofréquences 18, 20 peuvent provenir d'un satellite 22 de géolocalisation prévu pour le fonctionnement des dispositifs de géolocalisation par satellite (GPS), de stations radio prévues pour le fonctionnement des autoradios ou encore d'antennes relais 24 de téléphonie prévues pour le fonctionnement des dispositifs de téléphonie mobile.

Le véhicule 10 est également soumis à divers conditions météorologiques. Par exemple et de façons non limitatives, les conditions météorologiques peuvent être un ensoleillement 26 provoquant une luminosité importante de l'environnement du véhicule 10, des averses de pluie 28, un phénomène de vent, des averses de neige, des températures hautes ou basses...

De façon générale, les phénomènes extérieures au véhicule 10 sont altérés, voire disparaissent dans l'environnement 'sous tunnel'. En d'autres mots, la perception des phénomènes extérieurs par le véhicule 10 diffère lorsque le véhicule 10 passe d'un environnement 'à l'air libre' à un environnement 'sous tunnel', et vice versa.

Le véhicule comprend au moins un récepteur 30 de signaux radiofréquences provenant de sources externes au véhicule 10. Par exemple et de façons non limitatives le récepteur 30 de signaux radiofréquences peut être un dispositif de géolocalisation par satellite (GPS), un autoradio ou encore un dispositif de réception de signal de téléphonie.

Le véhicule 10 comprend également au moins un capteur 32 de conditions météorologiques, c'est-à-dire au moins un capteur 32 pouvant détecter un phénomène du à la météo comme l'ensoleillement 26, des averses de pluie 28, le vent, la neige, la température etc... Par exemple et de façons non limitatives, le véhicule peut comprendre un capteur 32 de luminosité coopérant généralement avec l'éclairage extérieur et intérieur du véhicule, ou encore un capteur 32 de pluie coopérant avec les dispositifs d'essuies glace.

Les capteurs 32 et récepteurs 30 d'ondes radiofréquences cités ci-dessus sont globalement des capteurs/récepteurs standards intégrés au véhicule (tel qu'un récepteur GPS, un capteur de luminosité, ....) fournissant des échantillons de la force / de la puissance du signal mesurée par le capteur dans le temps / l'espace.

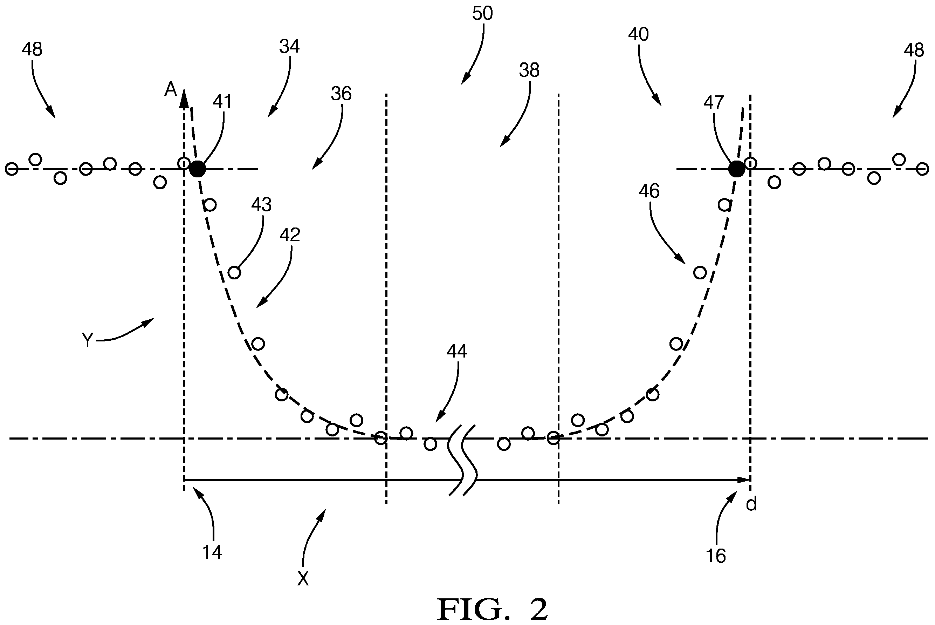

Selon la figure 2, un graphe 34 illustrant un exemple de variation d'amplitude détectée d'un signal radio fréquence reçu par le récepteur 30 de signal radiofréquences du véhicule 10 est représenté. Plus particulièrement, les cercles 43 représentent des échantillons de mesure de l'amplitude du signal GPS reçu par le dispositif GPS du véhicule 10 lors de la traversée du véhicule 10 dans un tunnel 12. Autrement dit, il s'agit de la variation d'amplitude du signal GPS reçu par le dispositif GPS du véhicule 10 lorsque le véhicule transit depuis un environnement 'air libre' 48 vers un environnement 'sous tunnel' 50 puis de l'environnement 'sous tunnel' 50 à l'environnement 'air libre' 48.

L'axe des abscisses X représente une distance d s'étendant depuis l'entrée 14 du tunnel 12 jusqu'à la sortie 16 du tunnel 12. L'axe des ordonnées Y représente la variation d'amplitude A du signal GPS reçu par le dispositif GPS du véhicule 10 lors de la traversée du véhicule 10 dans le tunnel 12. Le graphe 34 est découpé selon les trois phases de traversée du tunnel 12 par le véhicule 10, c'est-à-dire la phase d'entrée 36 du véhicule 10 dans le tunnel 12, la phase de roulage 38 du véhicule 10 dans le tunnel 12 et la phase de sortie 40 du véhicule 10 du tunnel 12.

Lors de la phase d'entrée 36 du véhicule 10 dans le tunnel 12, lorsque le véhicule 10 transit depuis l'environnement 'air libre' 48 jusqu'à l'environnement 'sous tunnel' 50, une décroissance du signal GPS reçu se produit. En effet, de façon générale, les signaux radiofréquences provenant de l'extérieur du tunnel 12 ne se propagent quasiment pas dans le tunnel 12. Il est à noter que cette décroissance ne se traduit pas par une perte immédiate du signal GPS dès que le véhicule 10 se situe sous le tunnel 12. Cependant, de manière générale, la diminution du signal GPS reçu est perceptible par le dispositif GPS du véhicule 10 après que le véhicule 10 ai roulé quelque mètres sous le tunnel 12. Généralement l'amplitude A du signal GPS reçu décroit depuis l'amplitude du signal GPS reçu juste avant le passage du véhicule 10 dans l'entrée 14 du tunnel 12 jusqu'à un niveau d'amplitude A globalement très bas, voir nul, généralement trop faible pour être exploité par le dispositif de géolocalisation du véhicule 10. De façon particulière cette décroissance de signal peut suivre une loi exponentielle décroissante 42 modélisée sur le graphe 50 par la courbe en pointillée.

De manière générale, lors de la phase de roulage 38 du véhicule 10 dans le tunnel 12, lorsque le véhicule 10 roule dans le tunnel 12, l'amplitude du signal GPS reçu reste constamment globalement très bas, voir nul. En d'autres termes, le signal reçu est globalement un signal plat 44 modélisé par la courbe en pointillée.

Lors de la phase de sortie 40 du véhicule 10 du tunnel 12, lorsque le véhicule 10 transit depuis l'environnement 'sous tunnel' 50 jusqu'à l'environnement 'air libre' 48, une augmentation de l'amplitude A du signal GPS reçu se produit. Cette augmentation de l'amplitude A du signal reçu se traduit par une augmentation progressive de l'amplitude du signal GPS dès que le véhicule 10 s'approche de la sortie 16 du tunnel 12. Généralement l'augmentation de l'amplitude A du signal GPS reçu commence à être perceptible par le dispositif GPS du véhicule 10 quelque mètres avant la sortie 16 du tunnel 12. Généralement l'augmentation de l'amplitude A du signal GPS reçu augmente depuis le niveau d'amplitude A très bas, voir nul, jusqu'à un niveau d'amplitude A du même ordre de grandeur que celui reçu juste avant l'entrée du véhicule 10 dans le tunnel 12. De façon particulière cette augmentation de l'amplitude A du signal peut suivre une loi exponentielle croissante 46 modélisée sur le graphe 50 par la courbe en pointillée.

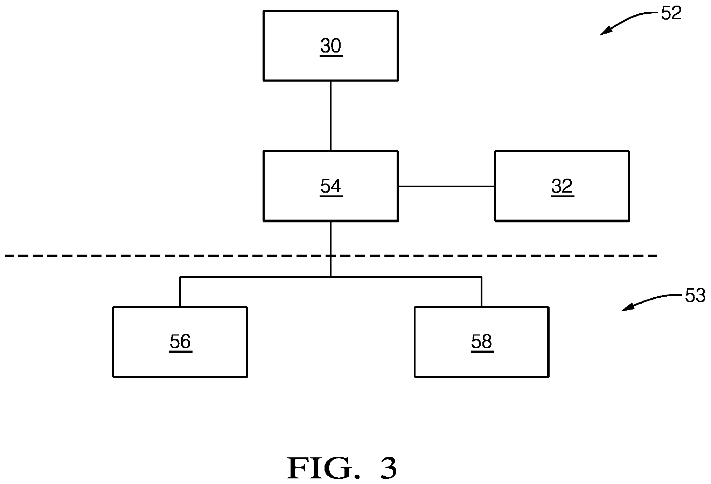

Selon la figure 3, le véhicule 10 comprend un système de détection 52 de tunnel 12 comportant le récepteur 30 de signaux radio fréquences prévu pour recevoir un signal radiofréquence provenant d'une source externe au véhicule 10 et un contrôleur 54 communicant avec le récepteur 30 de signaux radiofréquences. De façon additionnelle, le système de détection 52 comprend également d'autres capteurs standards de véhicule, de type capteur 32 de conditions météorologiques tel que décrit précédemment, reliés électriquement au contrôleur 54.

Le contrôleur 54 du système de détection 52 de tunnel 12 est configuré pour pouvoir détecter les variations des signaux reçus des capteurs 32 de conditions météorologiques et du récepteur 30 de signaux radio fréquences de sorte à détecter la présence du tunnel 12 lorsque le véhicule 10 traverse le tunnel 12.

De façon particulière, le système de détection 52 de tunnel 12 coopère avec des dispositifs d'aide à la conduite 53 du véhicule 10 telle que, par exemple et de façon non limitatives, un dispositif de freinage 56 d'urgence automatique par détection radar ou encore un dispositif de régulation de vitesse adaptative 58. Selon ce mode de réalisation, le contrôleur 54 est donc relié électriquement aux fonctions d'aide à la conduite 55 du véhicule 10 de sorte à pouvoir adapter les dites fonctions d'aide à la conduite 55 à l'environnement 'sous tunnel' 50.

A titre d'exemple et de façon non limitative, la détection de tunnel 12 par le système de détection 52 de l'invention permet de maintenir ou d'autoriser la fonction de freinage 57 d'urgence automatique du dispositif de freinage 56 d'urgence automatique. En effet, grâce au système détection 52 de tunnel 12 de l'invention, certaines réflexions d'ondes radars émises préalablement par le véhicule 10 pourront être interprétées par le dispositif de freinage d'urgence automatique comme la présence du tunnel 12 et non pas d'obstacle sur le trajet du véhicule 10. Ainsi, un freinage d'urgence automatique intempestif peut être évité.

Selon un mode de réalisation préféré, afin de pouvoir détecter un tunnel 12 traversé par le système 52, le contrôleur 54 communique avec le récepteur 30 de signaux radiofréquences, le contrôleur 54 étant configuré pour détecter les variations d'amplitude du signal radiofréquence reçu par le récepteur 30. Le contrôleur 54 est configuré pour déterminer au moins un niveau de correspondance FL représentatif de la différence entre la variation d'amplitude détectée du signal radiofréquence reçu avec au moins une variation d'amplitude de signal de référence RS prédéterminée représentative de la variation d'amplitude d'un signal reçue par le récepteur 30 lors d'une traversée du récepteur 30 dans un tunnel 12.

Le niveau de correspondance FL entre la variation d'amplitude du signal détectée et une variation d'amplitude de signal de référence RS prédéterminée peut varier de 0% à 100%. Un niveau de correspondance FL de 0% est déterminé lorsque les deux signaux comparés n'ont aucune similitude. Un niveau de correspondance FL de 100% est déterminé lorsque la variation d'amplitude des deux signaux comparés est strictement identique. Un niveau de correspondance FL compris entre 0% et 100% correspond au degré de similitude entre la loi de variation de l'amplitude du signal détectée avec la loi de variation de l'amplitude du signal de référence RS prédéterminée.

Le contrôleur 54 est configuré pour comparer le niveau de correspondance FL déterminé avec un seuil minimum de correspondance TH prédéterminé. Le seuil minimum de correspondance TH prédéterminé est le degré de similitude minimum requis par le système de détection 52 permettant de conclure quant à la détection ou à la non détection d'un tunnel 12 traversé par le système de détection 52. De préférence, le contrôleur 54 est configuré pour détecter au moins une variation de condition météorologique et pour ajuster le seuil minimum de correspondance TH prédéterminé selon la variation des conditions météorologiques détectées. Si le contrôleur 54 détecte une variation assez surprenante de conditions météorologiques, le contrôleur 54 conclura à une probabilité accrue de détection d'un tunnel 12 traversé par le système 52, le système de détection 52 ayant déjà détecté une variation d'amplitude du signal radiofréquence reçu. Une variation surprenante de conditions météorologique est une variation inhabituelle d'un phénomène météorologique dans l'environnement 'air libre' 48. De la sorte, le seuil minimum de correspondance TH prédéterminée pourra être revu à la baisse. En effet, la combinaison du niveau de correspondance FL déterminé et de la détection d'une variation assez surprenante de conditions météorologiques accroit le degré de probabilité de traversée du système 52 dans le tunnel 12.

A titre d'exemple non limitatif, une variation surprenante de conditions météorologiques peut être un arrêt soudain d'averse de pluie 28, une averse de pluie 28 soudaine, un changement brusque de luminosité passant de la clarté à l'obscurité ou passant de l'obscurité à la clarté. Ces variations surprenantes de conditions météorologiques laissent présager de la traversé d'un tunnel 12 par le système de détection 52. En effet, lorsqu'un véhicule 10 circule sous une averse de pluie 28 dans l'environnement 'air libre' 48, lorsque le véhicule entre dans un tunnel 12, alors le véhicule 10 n'est soudainement plus soumis à l'averse de pluie 28. Inversement, si les conditions météorologiques de l'environnement 'air libre' 48 sont des averses de pluie 28, un véhicule 10 sortant d'un tunnel 12 dans lequel il y a normalement pas d'averses de pluie 28, est soudainement soumis aux averses de pluie 28.

A titre d'exemple, et de façon non limitative, une variation d'amplitude de signal de référence RS prédéterminée peut être un signal comprenant une variation d'amplitude suivant une loi décroissante exponentielle 42 ou croissante exponentielle 46 représentative respectivement de la traversée du passage du récepteur 30 dans une entrée 14 de tunnel 12 ou dans une sortie 16 de tunnel 12. Selon cet exemple, si la variation d'amplitude du signal radiofréquence détectée suit la même loi exponentielle décroissante 42 de la variation d'amplitude du signal de référence RS prédéterminée, alors le niveau de correspondance FL doit être de 100%. Le niveau de correspondance FL de 100% sera nécessairement supérieur ou égal au seuil minimum de correspondance TH requis de sorte que le système détecte le passage du système 52 dans l'entrée 14 du tunnel 12.

A titre d'exemple et de façon non limitative, le seuil minimum de correspondance TH peut être établi à 90% par défaut, de sorte que la détection de la traversée du tunnel 12 par le système 52 est limitée aux détections de signaux radiofréquences dont l'amplitude varie d'une manière quasi similaire aux variations d'amplitude des signaux de référence RS prédéterminées. Cependant, si durant la détection d'une variation d'amplitude du signal radiofréquence reçu, le système 52 détecte également une variation d'averse de pluie 28 ou de luminosité surprenante, telle que décrite précédemment, le seuil minimum de correspondance est revue à la baisse, passant par exemple de 90% à 70%.

En complément à la détection d'un tunnel 12 traversé par le système de détection 52, la position de l'entrée 14 du tunnel 12 est estimée en utilisant le premier point d'interception 41 (voir figure 2) entre le niveau de signal radiofréquence reçu dans l'environnement 'air libre' 48 constant détecté avant l'entrée du système de détection 52 dans le tunnel 12 et la décroissance d'amplitude du signal détecté lors de l'entrée du système de détection 52 dans le tunnel 12. La position de la sortie 16 du tunnel 12 est estimée de la même manière en utilisant le second point d'interception 47 (voir figure 2) entre le niveau de signal dans l'environnement 'air libre' 48 constant détecté après la sortie du système de détection 52 du tunnel 12 et l'augmentation d'amplitude du signal détecté lors de la sortie du système de détection 52 du tunnel 12.

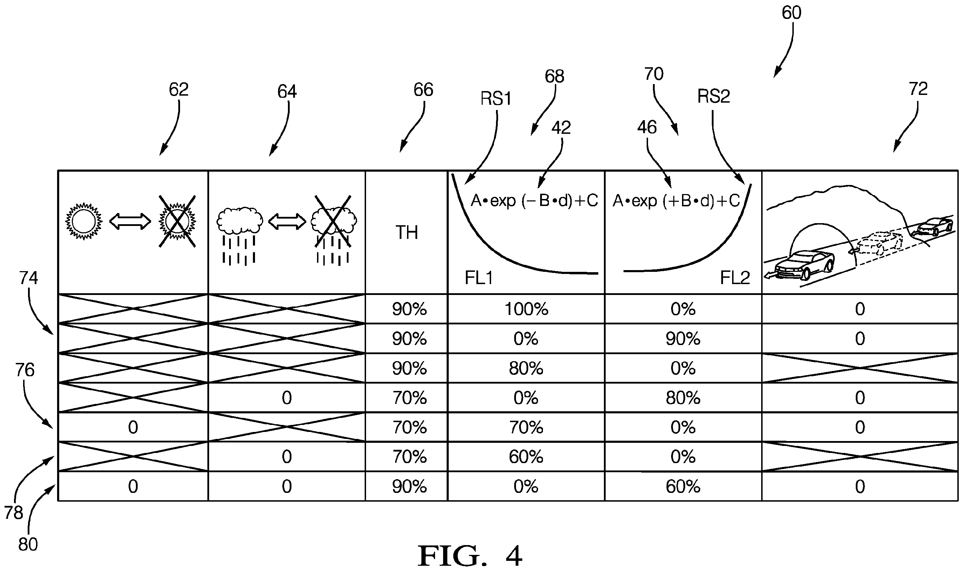

Selon la figure 4, un tableau 60 reprenant plusieurs exemples non-limitatifs de scénario de détection ou de non détection d'un tunnel 12 traversé par le véhicule 10 comprenant le système de détection 52 est représenté. Chaque ligne du tableau 60 correspond à un scénario de détection ou de non détection de la traversée du véhicule 10 dans un tunnel 12.

Tel que schématisé en en-tête de la première colonne 62, la première colonne 62 représente le résultat de la détection par un capteur de luminosité de la variation brutale de luminosité, passant de la clarté à l'obscurité ou vice versa. Lorsqu'une case de la première colonne 62 est marquée par une croix, cela signifie qu'il n'y a pas de détection d'une telle variation. Lorsqu'une case de la première colonne 62 est marquée par un cercle, cela signifie qu'une telle variation a été détectée.

De façon similaire, tel que schématisé en en-tête de la seconde colonne 64, la seconde colonne 64 représente le résultat de la détection par un capteur de pluie de la variation brutale d'averse de pluie 28, passant d'une averse de pluie 28 à une situation sans averses de pluie 28 ou vice versa. Lorsqu'une case de la seconde colonne 64 est marquée par une croix, cela signifie qu'il n'y a pas de détection d'une telle variation. Lorsqu'une case de la seconde colonne 64 est marquée par un cercle, cela signifie qu'une telle variation a été détectée.

La troisième colonne 66 indique le seuil minimum de correspondance TH prédéterminé. Lorsqu'aucune variation de conditions météorologiques n'est détectée, le seuil TH est fixé à 90%. Lorsqu'une seule variation de conditions météorologiques est détectée, le seuil TH est fixé à 70%. Lorsque deux variations de conditions météorologiques sont détectées, le seuil minimum de correspondance TH est fixé à 60%.

La quatrième colonne 68 et la cinquième colonne 70 représentent des niveaux de correspondance FL entre la variation d'amplitude du signal radiofréquence détectée et une variation d'amplitude de signaux de références RS prédéterminées. Plus précisément, la quatrième colonne 68 et la cinquième colonne 70 représentent respectivement des premiers niveaux de correspondance FL1 entre la variation d'amplitude du signal radio fréquence détectée et une variation d'amplitude décroissante exponentielle 42 d'un premier signal de référence RS1 prédéterminée, et des seconds niveaux de correspondance FL2 entre la variation d'amplitude du signal radiofréquence détectée et une variation d'amplitude croissante exponentielle 46 d'un second signal de référence RS2 prédéterminée. Selon cet exemple, on notera des niveaux de correspondance de 0%, 60%, 70%, 80%, 90% et 100%. Il est à noter selon cet exemple que lorsque le premier niveau de correspondance FL1 entre la variation d'amplitude du signal radiofréquence détectée et une variation d'amplitude exponentielle décroissante 42 est d'au moins 60%, alors le second niveau de correspondance FL2 entre la variation d'amplitude du signal radiofréquence détectée et une variation d'amplitude exponentielle croissante 46 est de 0%. Cela est simplement dû au fait qu'une variation d'amplitude suivant une loi exponentielle décroissante du type 'A.exp(-Bd)+C' est considéré par le système de l'invention comme n'ayant aucun degré de similitude avec une variation d'amplitude suivant une loi exponentielle croissante du type 'A.exp(+Bd)+C'. La variable 'd' des lois exponentielles est représentative de la distance parcouru par le véhicule. Les valeurs A, B et C sont des constantes dépendant de la nature du tunnel et des caractéristiques des signaux radiofréquences.

La sixième colonne 72 représente le résultat de la détection d'un tunnel 12 traversé par le système de détection 52 embarqué dans le véhicule 10. Si une case de la sixième colonne 72 est marquée d'une croix, cela signifie qu'il n'y a pas eu de détection. Si une case est marquée par un cercle, alors cela signifie qu'il y a eu détection.

Par exemple, selon le second scénario 74 (seconde ligne), le premier niveau de correspondance FL1 entre la variation d'amplitude du signal radiofréquence détectée et une variation d'amplitude décroissante exponentielle 42 est de 0%, et le second niveau de correspondance FL2 entre la variation d'amplitude du signal radiofréquence détectée et une variation d'amplitude croissante exponentielle 46 est de 90%. Puisque le seuil minimum de correspondance TH prédéterminé a été fixé à 90%, alors le système de détection 52 conclu à une détection d'un tunnel 12 traversé par le véhicule 10, plus particulièrement à la détection du passage du véhicule 10 dans la sortie 16 du tunnel 12.

De même, selon le cinquième scénario 76 (cinquième ligne), le premier niveau de correspondance FL1 entre la variation d'amplitude du signal radiofréquence détectée et une variation d'amplitude décroissante exponentielle 42 est de 70% et le second niveau de correspondance FL2 entre la variation d'amplitude du signal radiofréquence détectée et une variation d'amplitude croissante exponentielle 46 est de 0%. Puisque le seuil minimum de correspondance TH prédéterminé a été fixé à 70%, alors le système conclu à une détection d'un tunnel 12 traversé par le véhicule 10, plus particulièrement à la détection du passage du véhicule 10 dans l'entrée 14 du tunnel 12.

Selon le sixième scénario 78 (sixième ligne), le premier niveau de correspondance FL1 entre la variation d'amplitude du signal radiofréquence détectée et une variation d'amplitude décroissante exponentielle 42 est de 60% et le second niveau de correspondance FL2 entre la variation d'amplitude du signal radiofréquence détectée et une variation d'amplitude croissante exponentielle 46 est de 0%. Puisque le seuil minimum de correspondance TH prédéterminé a été fixé à 70%, alors le système conclu à une non détection d'un tunnel 12 traversé par le véhicule 10.

Il est à noter que selon le dernier scénario 80 représenté (7^{ième} ligne), le premier niveau de correspondance FL1 entre la variation d'amplitude du signal radiofréquence détectée et une variation d'amplitude décroissante exponentielle 42 est de 0% et le second niveau de correspondance FL2 entre la variation d'amplitude du signal radiofréquence détectée et une variation d'amplitude croissante exponentielle 46 est de 60%. Selon ce dernier scénario 80, les deux conditions de variations surprenantes de conditions météorologiques ont été détectées, permettant un ajustement de la valeur du seuil minimum de correspondance TH prédéterminé à 60%. Dans ce cas, le système de détection 52 conclu à une détection d'un tunnel 12 traversé par le véhicule 10 et plus particulièrement à la détection du passage du véhicule 10 dans la sortie 16 du tunnel 12.

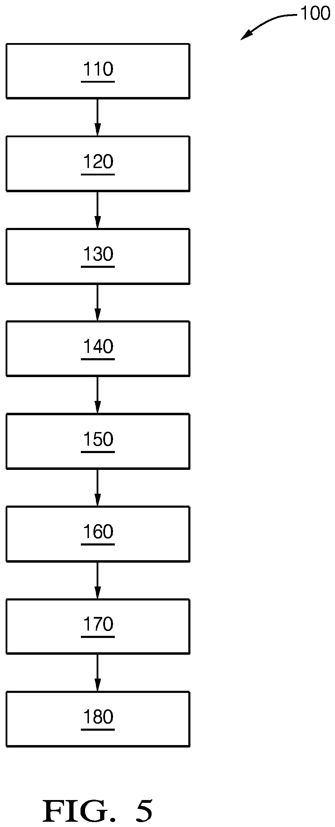

Selon la figure 5, une méthode 100 de détection d'un tunnel 12 par un véhicule 10 automobile comprend une première étape consistant à recevoir 110 un signal radiofréquence provenant d'une source externe au véhicule 10.

La seconde étape est une étape de détection 120 de la variation d'amplitude du signal radiofréquence reçu.

L'étape suivante consiste à déterminer au moins un niveau de correspondance FL représentatif de la différence entre la variation d'amplitude détectée du signal radiofréquence reçu et au moins une variation d'amplitude de signal de référence RS prédéterminée représentative de la variation d'amplitude de signal reçue lors d'une traversée du véhicule 10 dans un tunnel 12. De préférence, cette étape peut consister en deux étapes : une première étape de détermination 130 d'un premier niveau de correspondance FL1 représentatif de la différence entre la variation d'amplitude détectée du signal radiofréquence et une variation d'amplitude décroissante exponentielle 42 prédéterminée représentative du passage du système 52 dans une entrée 14 de tunnel 12; et une seconde étape de détermination 140 d'un second niveau de correspondance FL2 représentatif de la différence entre la variation d'amplitude détectée du signal radiofréquence et une variation d'amplitude croissante exponentielle 46 prédéterminée représentative du passage du système 52 dans une sortie 16 de tunnel 12.

L'étape suivante est une étape optionnelle de détection 150 de variations de conditions météorologiques, telle que par exemple une variation brutale d'averse de pluie 28 ou de luminosité. Cette étape de détection de variations de conditions météorologiques permet une étape d'ajustement 160 d'un seuil minimum de correspondance TH prédéterminé.

L'étape suivante consiste à comparer 170 les niveaux de correspondance FL1, FL2 déterminés avec le seuil minimum de correspondance TH prédéterminé.

La dernière étape consiste à détecter 180 le tunnel 12 traversé par le véhicule 10 lorsqu'au moins un niveau de correspondance FL1, FL2 déterminé est supérieur ou égal au seuil minimum de correspondance TH prédéterminé.

Selon l'invention, la méthode 100 de détection d'un tunnel 12 par un véhicule 10 automobile décrite ci-dessus peut faire partie d'une méthode d'activation d'une fonction de freinage 57 d'urgence automatique d'un véhicule 10 de sorte que lorsque qu'un tunnel traversé par le véhicule 10 est détectée, le système de détection 52 autorise la fonction de freinage 57 d'urgence automatique.

## Revendications

1. Système de détection (52) de tunnel (12) pour véhicule (10) automobile comprenant
un récepteur (30) de signaux radiofréquences prévu pour recevoir un signal radiofréquence provenant d'une source externe au véhicule (10);
un contrôleur (54) communicant avec le récepteur (30) de signaux radiofréquences, le contrôleur (54) étant configuré pour détecter au moins une variation d'amplitude du signal radio fréquence reçu par le récepteur (30);
**caractérisé en ce que**
le système de détection (52) de tunnel (12) comprend au moins un capteur (32) d'au moins une condition météorologique, de préférence un capteur de luminosité ;
le contrôleur (54) est configuré pour déterminer au moins un niveau de correspondance (FL) représentatif de la différence entre la variation d'amplitude détectée du signal radiofréquence avec au moins une variation d'amplitude de signal de référence (RS) prédéterminée représentative de la variation d'amplitude d'un signal reçue par le récepteur (30) lors d'une traversée du récepteur (30) dans un tunnel (12);
le contrôleur (54) est configuré pour comparer le niveau de correspondance (FL) déterminé avec un seuil minimum de correspondance (TH) prédéterminé;
et **en ce que** le contrôleur (54) est configuré pour détecter le tunnel (12) traversé par le système de détection (52) lorsque le niveau de correspondance (FL) déterminé est supérieur ou égal au seuil minimum de correspondance (TH) prédéterminé ;
le contrôleur (54) est configuré pour détecter au moins une variation de condition météorologique ;
le contrôleur (54) est configuré pour ajuster le seuil minimum de correspondance (TH) prédéterminé selon la variation de condition météorologique détectée.

2. Système de détection (52) de tunnel (12) selon la revendication 1 **caractérisé en ce que** le récepteur (30) de signaux radiofréquence comprend un système de géolocalisation par satellite (GPS).

3. Système de détection (52) de tunnel (12) selon l'une quelconque des revendications précédentes **caractérisé en ce que** la variation d'amplitude de signal de référence (RS) prédéterminée comprend une variation d'amplitude décroissante exponentielle (42) ou croissante exponentielle (46) représentative respectivement du passage du récepteur dans une entrée (14) de tunnel (12) ou dans une sortie (16) de tunnel (12) de sorte à pouvoir détecter le tunnel (12) traversé par le système de détection (52).

4. Véhicule (10) automobile **caractérisé en ce qu'**il comprend le système de détection de tunnel (12) de l'une quelconque des revendications précédentes.

5. Méthode (100) de détection d'un tunnel (12) par un véhicule (10) automobile comprenant le système de détection (52) de l'une quelconque des revendications 1 à 3 comprenant les étapes de
recevoir (110) un signal radio fréquence provenant d'une source externe au véhicule (10);
détecter (120) une variation d'amplitude du signal radiofréquence reçu ;
déterminer (130, 140) au moins un niveau de correspondance (FL) représentatif de la différence entre la variation d'amplitude détectée du signal radiofréquence avec au moins une variation d'amplitude de signal de référence (RS) prédéterminée représentative de la variation d'amplitude de signal reçue lors d'une traversée du véhicule (10) dans un tunnel (12);
comparer (170) le niveau de correspondance (FL) déterminé avec un seuil minimum de correspondance (TH) prédéterminé;
détecter (180) le tunnel (12) traversé par le véhicule (10) lorsque le niveau de correspondance (FL) déterminé est supérieur ou égal au seuil minimum de correspondance (TH) prédéterminé ;
l'étape de comparer (170) le niveau de correspondance (FL) déterminé avec un seuil minimum de correspondance (TH) prédéterminé comprend préalablement les étapes de:
détecter (150) une variation de conditions météorologiques ;
ajuster (160) le seuil minimum de correspondance (TH) prédéterminé selon la variation de condition météorologique détectée..

6. Méthode (100) de détection selon la revendication précédente **caractérisé en ce que** l'étape de déterminer (130, 140) au moins un niveau de correspondance comprend une étape de déterminer (130, 140) au moins un niveau de correspondance (FL) représentatif de la différence entre la variation d'amplitude détectée du signal radiofréquence avec une variation d'amplitude décroissante exponentielle (42) prédéterminée ou croissante exponentielle (46) prédéterminée représentative respectivement de la traversée du récepteur (30) dans une entrée (14) de tunnel (12) ou dans une sortie (16) de tunnel (12).

## Patentansprüche

1. System zum Detektieren (52) eines Tunnels (12) für ein Kraftfahrzeug (10), umfassend
einen Radiofrequenzsignal-Empfänger (30), der vorgesehen ist, ein Radiofrequenzsignal von einer externen Quelle des Fahrzeugs (10) zu empfangen;
einen Controller (54), der mit dem Radiofrequenzsignal-Empfänger (30) kommuniziert, wobei der Controller (54) ausgelegt ist, um mindestens eine Amplitudenvariation des von dem Empfänger (30) empfangenen Radiofrequenzsignals zu ermitteln;
**dadurch gekennzeichnet, dass**
das System zum Detektieren (52) eines Tunnels (12) mindestens einen Sensor (32) mindestens einer meteorologischen Bedingung, vorzugsweise einen Lichtstärkesensor, umfasst;
der Controller (54) ausgelegt ist, um mindestens ein Übereinstimmungsniveau (FL) zu bestimmen, das für die Differenz zwischen der ermittelten Amplitudenvariation des Radiofrequenzsignals und mindestens einer vorbestimmten Referenzsignal-Amplitudenvariation (RS) repräsentativ ist, die für die Amplitudenvariation eines von dem Empfänger (30) empfangenen Signals bei einer Durchquerung des Empfängers (30) eines Tunnels (12) repräsentativ ist;
der Controller (54) ausgelegt ist, um das bestimmte Übereinstimmungsniveau (FL) mit einem vorbestimmten Mindest-Übereinstimmungsgrenzwert (TH) zu vergleichen;
und dass der Controller (54) ausgelegt ist, um den von dem Detektionssystem (52) durchquerten Tunnel (12) zu ermitteln, wenn das bestimmte Übereinstimmungsniveau (FL) größer oder gleich dem vorbestimmten Mindest-Übereinstimmungsgrenzwert (TH) ist;
der Controller (54) ausgelegt ist, um mindestens eine Variation einer meteorologischen Bedingung zu ermitteln;
der Controller (54) ausgelegt ist, um den vorbestimmten Mindest-Übereinstimmungsgrenzwert (TH) an die ermittelte Variation einer meteorologischen Bedingung anzupassen.

2. Detektionssystem (52) eines Tunnels (12) nach Anspruch 1, **dadurch gekennzeichnet, dass** der Radiofrequenzsignal-Empfänger (30) ein Satelliten-Geolokalisierungssystem (GPS) umfasst.

3. Detektionssystem (52) eines Tunnels (12) nach einem der vorangehenden Ansprüche, **dadurch gekennzeichnet, dass** die vorbestimmte Referenzsignal-Amplitudenvariation (RS) eine exponentiell abnehmende (42) oder exponentiell zunehmende (46) Amplitudenvariation umfasst, die jeweils für das Passieren des Empfängers eines Eingangs (14) eines Tunnels (12) oder eines Ausgangs (16) eines Tunnels (12) derart repräsentativ ist, dass der von dem Detektionssystem (52) durchquerte Tunnel (12) ermittelbar ist.

4. Kraftfahrzeug (10), **dadurch gekennzeichnet, dass** es das Detektionssystem eines Tunnels (12) nach einem der vorangehenden Ansprüche umfasst.

5. Methode (100) zum Detektieren eines Tunnels (12) durch ein Kraftfahrzeug (10), umfassend das Detektionssystem (52) nach einem der Ansprüche 1 bis 3, umfassend die folgenden Schritte
Empfangen (110) eines Radiofrequenzsignals von einer externen Quelle des Fahrzeugs (10);
Ermitteln (120) einer Amplitudenvariation des empfangenen Radiofrequenzsignals;
Bestimmen (130, 140) mindestens eines Übereinstimmungsniveaus (FL), das für die Differenz zwischen der ermittelten Amplitudenvariation des Radiofrequenzsignals und mindestens einer vorbestimmten Referenzsignal-Amplitudenvariation (RS) repräsentativ ist, die für die Amplitudenvariation eines empfangenen Signals bei einer Durchquerung des Empfängers (10) eines Tunnels (12) repräsentativ ist;
Vergleichen (170) des bestimmten Übereinstimmungsniveaus (FL) mit einem vorbestimmten Mindest-Übereinstimmungsgrenzwert (TH) ;
Ermitteln (180) des von dem Fahrzeug (10) durchquerten Tunnels (12), wenn das bestimmte Übereinstimmungsniveau (FL) größer oder gleich dem vorbestimmten Mindest-Übereinstimmungsgrenzwert (TH) ist;
wobei der Vergleichsschritt (170) des bestimmten Übereinstimmungsniveaus (FL) mit einem vorbestimmten Mindest-Übereinstimmungsgrenzwert (TH) zuvor die folgenden Schritte umfasst:
Ermitteln (150) einer Variation meteorologischer Bedingungen;
Anpassen (160) des vorbestimmten Mindest-Übereinstimmungsgrenzwerts (TH) an die ermittelte Variation einer meteorologischen Bedingung.

6. Detektionsmethode (100) nach vorangehendem Anspruch, **dadurch gekennzeichnet, dass** der Schritt des Bestimmens (130, 140) mindestens eines Übereinstimmungsniveaus einen Schritt des Bestimmens (130, 140) mindestens eines Übereinstimmungsniveaus (FL) umfasst, das für die Differenz zwischen der ermittelten Amplitudenvariation des Radiofrequenzsignals und einer vorbestimmten exponentiell abnehmenden (42) oder exponentiell zunehmenden (46) Amplitudenvariation repräsentativ ist, die jeweils für die Durchquerung des Empfänger (30) eines Eingang (14) eines Tunnels (12) oder eines Ausgang (16) eines Tunnels (12) repräsentativ ist.

## Claims

1. A system for detecting (52) a tunnel (12) for a motor vehicle (10) comprising:
a radiofrequency signal receiver (30) provided to receive a radiofrequency signal coming from a source external to the vehicle (10);
a controller (54) communicating with the radiofrequency signal receiver (30), the controller (54) being configured to detect at least one variation in amplitude of the radiofrequency signal received by the receiver (30);
**characterized in that**
the tunnel (12) detection system (52) comprises at least one sensor (32) of at least one weather condition, preferably a light sensor;
the controller (54) is configured to determine at least one match level (FL) representative of the difference between the detected variation in amplitude of the radiofrequency signal with at least one predetermined variation in amplitude of the reference signal (RS) representative of the signal amplitude variation received by the receiver (30) when the receiver (30) passes through a tunnel (12);
the controller (54) is configured to compare the determined match level (FL) with a predetermined minimum match threshold (TH);
and **in that** the controller (54) is configured to detect the tunnel (12) through which the detection system (52) passes when the determined match level (FL) is greater than or equal to the predetermined minimum match threshold (TH);
the controller (54) is configured to detect at least one variation in weather condition;
the controller (54) is configured to adjust the predetermined minimum match threshold (TH) according to the detected variation in weather condition.

2. The tunnel (12) detection system (52) according to claim 1 **characterized in that** the radiofrequency signal receiver (30) comprises a global positioning system (GPS).

3. The tunnel (12) detection system (52) according to any one of the preceding claims **characterized in that** the predetermined variation in amplitude of the reference signal (RS) comprises an exponential decreasing (42) or exponential increasing (46) amplitude variation representative respectively of the passage of the receiver in a tunnel (12) inlet (14) or in a tunnel (12) outlet (16) so as to be able to detect the tunnel (12) through which the detection system (52) passes.

4. A motor vehicle (10) **characterized in that** it comprises the tunnel detection system (12) of any one of the preceding claims.

5. A method (100) for detecting a tunnel (12) by a motor vehicle (10) comprising the detection system (52) of any one of claims 1 to 3 comprising the steps of:
receiving (110) a radiofrequency signal coming from a source external to the vehicle (10);
detecting (120) a variation in amplitude of the received radiofrequency signal;
determining (130, 140) at least one match level (FL) representative of the difference between the detected variation in amplitude of the radiofrequency signal with at least one predetermined variation in amplitude of the reference signal (RS) representative of the signal amplitude variation received when the vehicle (10) passes through a tunnel (12);
comparing (170) the determined match level (FL) with a predetermined minimum match threshold (TH);
detecting (180) the tunnel (12) through which the vehicle (10) passes when the determined match level (FL) is greater than or equal to the predetermined minimum match threshold (TH) ;
the step of comparing (170) the determined match level (FL) with a predetermined minimum match threshold (TH) comprises beforehand the steps of:
detecting (150) a variation in weather conditions;
adjusting (160) the predetermined minimum match threshold (TH) according to the detected variation in weather condition.

6. The detection method (100) according to the preceding claim **characterized in that** the step of determining (130, 140) at least one match level comprises a step of determining (130, 140) at least one match level (FL) representative of the difference between the detected variation in amplitude of the radiofrequency signal with a predetermined exponential decreasing (42) or a predetermined exponential increasing (46) amplitude variation representative respectively of the receiver (30) passing through a tunnel (12) inlet (14) or through a tunnel (12) outlet (16).
